(19) Europäisches Patentamt

European Patent Office

Office européen des brevets

(11) Veröffentlichungsnummer: **0 613 913 A1**

## (12) EUROPÄISCHE PATENTANMELDUNG

(21) Anmeldenummer: **94102559.5**

(22) Anmeldetag: **21.02.94**

(51) Int. Cl.5: **C08G 18/10**, C08G 18/80, C08G 18/76, C08G 18/69, C09J 175/04, C09J 175/14

(30) Priorität: **04.03.93 DE 4306718**

(43) Veröffentlichungstag der Anmeldung:
**07.09.94 Patentblatt 94/36**

(84) Benannte Vertragsstaaten:
**DE GB IT**

(71) Anmelder: **BAYER AG**

**D-51368 Leverkusen (DE)**

(72) Erfinder: **Thiery, Urs, Dr.**
**Goethestrasse 71**
**D-41539 Dormagen (DE)**
Erfinder: **Ganster, Otto, Dr.**
**Droste-Hülshoff-Strasse 5**
**D-51519 Odenthal (DE)**
Erfinder: **Panskus, Knut**
**Grüner Weg 28a**
**D-51375 Leverkusen (DE)**

(54) **Vernetzer für Polymer-Klebstoffe auf der Basis der Umsetzungsprodukte von 2,4,6-Triisocyanato-toluol und Polyolen.**

(57) Vernetzer für Polymer-Klebstoffe mit einer Viskosität von 3 bis 4000 mPas/25°C, basierend auf den Umsetzungsprodukten von 2,4,6-Triisocyanato-toluol und Polyolen, die eine OH-Zahl von 56 bis 1867 und eine mittlere Funktionalität von 1,2 bis 2,2 aufweisen und aus der Gruppe der Polyetherpolyole, Polyesterpolyole, Alkanpolyole sowie Polycarbonatpolyole gewählt werden, wobei der Restgehalt an 2,4,6-Triisocyanato-toluol im Umsetzungsprodukt kleiner als 1 Gew.-% ist, eignen sich zur Herstellung von Polymer-Klebstoffen auf der Basis von Natur- und Synthesekautschuken sowie Hydroxylgruppenaufweisenden Polyurethanen.

EP 0 613 913 A1

Die vorliegende Erfindung betrifft Vernetzer für Polymer-Klebstoffe basierend auf den Umsetzungsprodukten von 2,4,6-Triisocyanato-toluol und Polyolen, die in Klebstoffen auf Basis von Natur- und Synthesekautschuken oder Hydroxyl-Gruppen aufweisenden Polyurethanen Verwendung finden.

Polyisocyanate werden als vernetzende Zusatzmittel auf dem Klebstoffgebiet in großem Umfang zusammen mit Lösungen von Polymeren sehr unterschiedlicher Art eingesetzt. So setzt man u.a. Lösungen aus Natur- oder Synthesekautschuk oder Polyurethanen, beispielsweise Lösungen aus Nitrilkautschuk, Chloroprenkautschuk oder Hydroxylpolyesterpolyurethanen, Lösungen von 4,4',4''-Triphenylmethan-triisocyanat zu und erreicht so eine günstigere Haftung an vielen zu klebenden Werkstoffen und eine höhere Beständigkeit der Klebungen bei Wärmeeinwirkung. Die Verwendbarkeit dieses Triisocyanates ist auf vielen Gebieten, z.B. in der Leder- und Kunstlederverarbeitenden Industrie, dadurch erheblich eingeschränkt, daß sich Klebungen mit diesem Triisocyanat vor allem unter Lichteinfluß dunkelviolett färben,

Bei verfärbungsempfindlichen Klebungen wird daher zur Vermeidung dieses Nachteils die Verwendung von hellfarbigen Isocyanatoarylphosphorsäure- bzw. Thiophosphorsäure-Derivaten vorgeschlagen. Die Verwendung dieser Isocyanate führt auf hoch weichmacherhaltigen Substraten jedoch nur zu weniger hohen Klebefestigkeiten.

Auch die hellfarbenen Polyisocyanate mit Isocyanurat-Struktur, wie sie nach den in Saunders Frisch: "Polyurethanes, Chemistry and Technology Part 1, Interscience Publishers 1962" beschriebenen Verfahren durch Polymerisation von 2,4- und 2,6-TDI entstehen, konnten sich in der Praxis nicht in allen Bereichen durchsetzen, da bei der Herstellung dieser Produkte zur Reduzierung des Gehaltes an freiem TDI es erforderlich ist, mehr als 60 % der vorhandenen Isocyanat-Gruppen des als Ausgangsmaterials eingesetzten Diisocyanates zu trimerisieren. Dies führt zu höhermolekularen Produkten, d.h. mehrere Isocyanurat-Ringe aufweisenden Polyisocyanaten, mit einem für manche Bereiche unzureichenden Eigenschaftsniveau. Derartige Polyisocyanat-Gemische mit einem erhöhten Gehalt an höhermolekularem Polyisocyanato-Polyisocyanuraten sind beispielsweise als Vernetzer für Klebstoffe oder Elastomere nur bedingt geeignet, da sie die Haftung an wenig klebfreudigen Materialien nur geringfügig verbessern.

In der Deutschen Offenlegungsschrift 31 26 842 werden Polyurethanklebstoffe auf Basis eines Hydroxypolyurethan-Elastomeren und 2,4,6-Isocyanato-toluol beschrieben, Aufgrund des niedrigen Molekulargewichts ist das Vernetzungsmittel, 2,4,6-Triisocyanatotoluol, jedoch leichter flüchtig als die zuvor erwähnten Polyisocyanate, die ebenfalls zur Vernetzung dienen. Der Einsatz von 2,4,6-Triisocyanatotoluol in Lösungsmittelsystemen ist daher aus arbeitshygienischer Sicht problematisch, so daß es gilt, geeignetere Polyisocyanate zu finden, die nicht zur Verfärbung neigen und trotzdem eine hohe Klebefestigkeit vermitteln.

Es wurde nun gefunden, daß sich 2,4,6-Triisocyanato-toluol unter bestimmten Bedingungen so mit Polyolen umsetzen läßt, daß zum einen der Restgehalt an monomerem 2,4,6-Triisocyanatotoluol kleiner als 1 Gew.-% im Umsetzungsprodukt beträgt und zum anderen die erhaltenen Umsetzungsprodukte besonders bei hoch weichmacherhaltigen Substraten zu Klebungen mit erhöhter Festigkeit und höherer Temperaturbeständigkeit führt.

Gegenstand der vorliegenden Erfindung sind demnach Vernetzer für Polymer-Klebstoffe mit einer Viskosität von 3 bis 4000 mPas/25°C, bevorzugt von 3 bis 1000 mPas/25°C, bestimmt mit Rotovisco RV 12 der Fa. Haake, Karlsruhe, Germany, basierend auf den Umsetzungsprodukten von 2,4,6-Triisocyanato-toluol und Polyolen, die eine OH-Zahl von 56 bis 1867 und eine mittlere Funktionalität von 1,2 bis 2,2 aufweisen und aus der Gruppe der Polyetherpolyole, Polyesterpolyole, Alkanpolyole sowie Polycarbonatpolyole gewählt werden, wobei der Restgehalt an 2,4,6-Triisocyanatotoluol (1 Gew.-%, bevorzugt (0,5 Gew.-%, in den Umsetzungsprodukten ist.

Als Polyetherpolyole, Polyesterpolyole, Alkanpolyole und Polycarbonatpolyole kommen solche in Betracht, die die zuvor erwähnte OH-Zahl und die mittlere Funktionalität besitzen, Selbstverständlich können die genannten Polyole noch ein- oder mehrfach durch Alkylreste, Alkoxygruppen, Arylgruppen und Halogenatome, wie Methyl, Ethyl, Methoxy, Ethoxy, Cl, Br, F, Phenyl, substituiert oder darauf aufgebaut sein.

Polyetherpolyole im Sinne der Erfindung sind im wesentlichen solche, die sich aus Ethylenoxid, Propylenoxid oder Tetrahydrofuran aufbauen lassen, unter Verwendung der üblichen Starter. Übliche Starter sind z.B. $H_2O$, Ethylenglykol, Propylenglykol, Methylamin, Phenylamin, Bisphenol A, 2,2-Bishydroxyphenylpropan, Tripropylenglykol, Bisphenol A ← 5,7 mol PO(Umsetzungsprodukt aus 1 mol Bisphenol A mit 5,7 mol Polypropylenoxid), 1,4-Butandiol, 2,5-Hexandiol, 1,6-Hexandiol.

Als Polyesterpolyole kommen insbesondere solche in Frage, die durch Polykondensation von Alkandicarbonsäuren mit 4 bis 12, vorzugsweise 6 bis 10 Kohlenstoffatomen und Alkandiolen mit 2 bis 10, vorzugsweise 4 bis 6 Kohlenstoffatomen oder von geradkettigen Hydroxyalkanmonocarbonsäuren mit mindestens 5 Kohlenstoffatomen, wie ε-Hydroxycapronsäure, sowie durch Polymerisation von Lactonen, wie ε-Caprolacton, hergestellt werden. Beispielhaft genannt seien als Alkandicarbonsäuren Bernstein-, Malein-, Kork-, Azelain-, Sebacin- und vorzugsweise Adipinsäure und als Alkandiole Ethandiol, Propandiol-1,3 und vorzugsweise Butandiol-1,4, Pentandiol-1,5 und Hexandiol-1,6.

Als Alkandiole eignen sich vorzugsweise solche mit 2 bis 8, insbesondere 4 bis 6 Kohlenstoffatomen, wie Ethandiol, Propandiol-1,3, Butandiol-1,4, Pentandiol-1,5, Hexandiol-1,6 und -2,5 sowie 2,5-Dimethyl-2,5-hexandiol. Vorzugsweise werden eingesetzt 1,4-Butandiol, 2,5-Hexandiol und 2,5-Dimethyl-2,5-hexandiol.

Als Polycarbonatpolyole kommen insbesondere solche in Frage, die sich aus Hexandiol, Triethylenglykol und Tetraethylenglykol aufbauen.

Selbstverständlich ist es auch möglich andere Polyole als die zuvor erwähnten einzusetzen, sofern sie eine entsprechende OH-Zahl und mittlere Funktionalität besitzen.

Wie bereits erwähnt, zeichnen sich die erfindungsgemäßen Vernetzer dadurch aus, daß sie nur einen geringen Restgehalt an monomerem 2,4,6-Triisocyanatotoluol besitzen. Der geringe Restgehalt an Triisocyantotoluol wird dadurch erreicht, daß man die Umsetzung von 2,4,6-Triisocyanatotoluol mit den erwähnten Polyolen unter milden Reaktionsbedingungen in geeigneten, inerten Lösungsmitteln durchführt. Als inerte, organische Lösungsmittel eignen sich insbesondere Ethylacetat, Methylethylketon, Toluol und Methylenchlorid sowie Gemische dieser Lösungsmittel.

Die Umsetzung erfolgt bei Reaktionstemperaturen von ca. 10 bis 100°C, bevorzugt 20 bis 80°C.

Man erreicht die milden Reaktionsbedingungen insbesondere dadurch, daß man das Triisocyanatotoluol in ausreichender Verdünnung in den erwähnten Lösungsmitteln vorlegt (ca. 10 bis 60%ige, bevorzugt 20 bis 50%ige Lösungen), das entsprechende Polyol langsam zutropft und die Reaktionstemperatur dabei möglichst niedrig hält, Die am besten geeigneten Reaktionsbedingungen die u.a. von den Ausgangsverbindungen abhängen, können leicht durch entsprechende Vorversuche ermittelt werden.

Für die Umsetzung wird das Verhältnis der Anzahl eingesetzter NCO-Gruppen zu Hydroxylgruppen so gewählt, daß die Viskosität der Umsetzungsprodukte niedrig genug ist, um eine Vermischung mit den übrigen Komponenten in Frage kommender Klebstoffrezepturen zu gewährleisten.

Üblicherweise erfolgt die Umsetzung in der Weise, daß einer OH-Gruppe der Polyolkomponente durchschnittlich 2,95 bis 2,00, bevorzugt 2,85 bis 2,60 Isocyanatgruppen des Triisocyanatotuluols entsprechen.

Nach der erfindungsgemäßen Umsetzung wird das eingesetzte Lösungsmittel soweit abdestilliert, bis der gewünschte NCO-Wert erreicht ist. Wünschenswert sind für das Umsetzungsprodukt NCO-Werte von 3 bis 20 %, bevorzugt 5 bis 15 %.

Die erfindungsgemäßen Vernetzer mit der zuvor erwähnten Viskosität kommen vorzugsweise in Lösungsmittel-haltigen Klebstoffen auf Basis von Natur- oder Synthesekautschuken oder auf Basis von Hydroxylgruppen-haltigen Polyurethanen zum Einsatz.

Als Synthesekautschuktypen, die mit dem erfindungsgemäßen Vernetzer sich zu geeigneten Klebstoffen abmischen lassen, kommen insbesondere Polymerisate von Dienen, wie Butadien, oder Mischpolymerisate von Dienen, wie Butadien, mit einfach olefinisch ungesättigten Verbindungen, wie Styrol, Acrylnitril und/oder Methacrylnitril, in Frage, sowie Polymerisate oder Mischpolymerisate des 2-Chlorbutadiens-1,3 mit anderen olefinischen ungesättigten Monomeren der zuvor genannten Art.

Als Hydroxylgruppen aufweisende Polyurethane eignen sich insbesondere solche, die ein gelchromatographisch bestimmtes Molekulargewicht von 30.000 bis 1.000.000, vorzugsweise 50.000 bis 200.000, besitzen; insbesondere lineare oder weitgehend lineare, endständige Hydroxylgruppen aufweisende Polyurethane, die aus

1. Dihydroxypolyestern des rechnerischen Molekulargewichts 1250 bis 4000, vorzugsweise 2000 bis 4000, aus aliphatischen oder aromatischen Dicarbonsauren, wie Adipinsäure oder Phthalsäure, und Alkandiolen, wie Ethylenglykol, oder aus Polylactonen, insbesondere Poly-$\epsilon$-caprolacton und

2. aromatischen oder aliphatischen Diisocyanaten, insbesondere 2,4-Diisocyanatotoluol, dessen Gemische mit 2,6-Diisocyanatotoluol, 4,4'-Diisocyanatodiphenylmethan oder Hexamethylendiisocyanat, gegebenenfalls unter Mitverwendung von

3. Glykolen des Molekulargewichts 62 bis 200 als Kettenverlängeruingsmittel, wie Tetramethylenglykol oder Hexamethylenglykol, in einem molekularen NCO/OH-Äquivalentverhältnis von 0,9:1 bis 0,999:1 hergestellt worden sind.

Bevorzugt werden Polymerisate oder Mischpolymerisate des 2-Chlorbutadien-1,3 (Polychloropren) und die genannten Hydroxylgruppen aufweisenden Polyurethane eingesetzt. Selbstverständlich können auch andere Elastomere eingesetzt werden, die mit dem erfindungsgemäßen Vernetzer eine entsprechende Klebstoffkombination bilden.

Zur Herstellung der fertigen Klebstoffe werden die genannten elastomeren Klebrohstoffe in den zuvor erwähnten Lösungsmitteln gelöst und diese Lösungen mit dem ebenfalls in den genannten Lösungsmitteln gelösten erfindungsgemäßen Vernetzer vermischt.

Bevorzugt sind 10 bis 50 gew.-%ige, besonders bevorzugt 10 bis 30%ige Lösungen der genannten elastomeren Klebrohstoffe in den ebenfalls bereits genannten Lösungsmitteln oder Lösungsmittelgemischen.

Die erfindungsgemäßen Vernetzer werden den Lösungen der elastomeren Klebrohstoffe in Mengen von 2 bis 15 Gew.-%, bevorzugt 2 bis 10 Gew.-%, bezogen auf die genannten elastomeren Klebrohstoffe, zugesetzt. Um eine schnelle und homogene Durchmischung der elastomeren Klebrohstoffe mit dem erfindungsgemäßen Vernetzer zu erreichen, ist es oft vorteilhaft, die erfindungsgemäß zu verwendenden Vernetzer als 10 bis 50 gew.-%ige, bevorzugt 15 bis 40gew.-%ige Lösungen, in den genannten Lösungsmitteln den sich in Lösung befindlichen elastomeren Klebrohstoffen zuzusetzen.

Zur Modifizierung ihrer technologischen Eigenschaften können den Klebmitteln auch noch weitere Zusatzmittel zugemischt werden. Hierzu gehören beispielsweise Naturharze oder modifizierte Harze, wie Kolophoniumester, oder synthetische Harze, wie Phthalatharze, oder - insbesondere im Falle der Klebstoffe auf Basis von Hydroxylgruppen aufweisenden Polyurethanen - auch elastische Polymerer, wie Chlorkautschuk, oder lösliche Polymerisate oder Mischpolymerisate des Vinylacetats oder anderer Vinylverbindungen. Diese Zusatzmittel, insbesondere die genannten Harze, werden im allgemeinen zur Erzielung einer besonders andauernden Kontaktbindefähigkeit oder zur Erhöhung der Kohäsionsfestigkeit zugesetzt. Die Zusatzmittel werden in üblichen Mengen eingesetzt.

Die nach der beschriebenen Art hergestellten Klebstofflösungen mit dem erfindungsgemäßen Vernetzer eignen sich insbesondere zum Kleben von Textilien, Leder, Kunststoffen, Holz und Papier, vorzugsweise zum Verkleben von Gummi- oder Weich-PVC.

Die nachstehenden Beispiele dienen zur weiteren Erläuterung der Erfindung. Alle Prozentangaben beziehen sich auf Gewichtsprozente.

Beispiele

I. Herstellung des erfindungsgemäßen Vernetzers
Beispiel 1
140 g (0,65 mol) 2,4,6-Triisocyanatotoluol (TIT) wurden in 476 g Ethylacetat vorgelegt, bei 60°C gelöst und auf Raumtemperatur gekühlt. Innerhalb von 7 h wurden 75 g (0,36 mol) eines Tripropylenglykol-Gemisches der OH-Zahl 532 zugetropft, wobei die Temperatur der Reaktionsmischung auf 32°C stieg. Es wurde 14 h bei Raumtemperatur nachgerührt.

Der NCO-Wert der Reaktionslösung betrug 6,9 %. Mittels SFC (Super Fluid Chromatographie) wurde ein Restgehalt an 2,4,6-Triisocyanatotoluol von 0,35 % festgestellt. Farbe der Isocyanat-Lösung: hellgelb.

Viskosität: 10 mPa.s/27°C (gemessen mit Rotovisco RV 12, Fa. Haake, Karlsruhe, Germany).

Analog Beispiel 1 wurden die Beispiele 2 bis 7 durchgeführt. Die Kenndaten der Beispiele sind aus Tabelle 1 zu entnehmen.
II. Herstellung eines Polyurethan-Klebstoffes
Ein im wesentlichen lineares, Hydroxylgruppen aufweisendes Polyurethan mit einem gelchromatographisch ermittelten Molekulargewicht von etwa 100.000, aus 4,4'-Diisocyanatodiphenylmethan und einem Hydroxylgruppen-haltigen Polyester aus Adipinsäure und Hexandiol, wurde in Methylethylketon zu einer etwa 20%igen Lösung mit einer Viskosität von 2 Pa.s bei 20°C gelöst.

Zur Herstellung des Polyurethan-Klebstoffes wurden 100 Teile der beschriebenen Polyurethanlösung mit 5 Teilen des Vernetzers des Beispiels 1 gründlich gemischt.

4

Tabelle 1: Umsetzung von TIT mit Diolen (erfindungsgemäße Vernetzer)

| Bsp. Nr. | Diol | KZ (NCO) | RT/t | Zutropfzeit | FS | NCO | SFC$_{TIT}$ |
|---|---|---|---|---|---|---|---|
| 1 | Tripropylenglykol | 273 | 25°C/24 h | 7 h/25°C | 29 % | 6,8 % | 0,35 %[1] |
| 2 | 2,5-Dimethyl-2,5-hexandiol | 285 | 60°C/12 h | 15 h/25°C | 25 % | 7,4 % | 0,20 % |
| 3 | 2,5-Hexandiol | 285 | 60°C/2 h | 9 h/25°C | 24 % | 6,9 % | 0,16 % |
| 4 | 2,5-Hexandiol | 285 | 25°C/40 h | 24 h/25°C | 24 % | 6,7 % | 0,49 % |
| 5 | 2,5-Hexandiol | 285 | 27°C/24 h | 2 h/25°C | 12 % | 3,5 % | 0,07 %[2] |
| 7 | Bisphenol A + 5,7 PO | 273 | 25°C/25 h | 7 h/25°C | 46 % | 6,7 % | 0,44 % |
| 7 | 1,4-Butandiol | 250 | 50°C/6 h | 4 h/50°C | 25 % | 7,0 % | 0,49 % |

KZ: Kennzahl (Verhältnis NCO-Gruppen zu Anzahl OH-Gruppen x 100)

RT: Raumtemperatur

t: Zeit

FS: Feststoff

SFC: Super Fluid Chromatographie

1) Viskosität: 10 mPa.s/27°C

2) Bei 27°C/WSV Ethylacetat abdest, bis NCO = 7,0 %

Alle Reaktionslösungen sind hellgelb

III: Testmaterialien

Die Prüfung der Klebstoffe erfolgte auf folgendem Testmaterial.

a) PVC mit 30 % DOP (Dioctylphthalat)
b) PVC mit 40 % DOP (Dioctylphthalat)

IV. Meßergebnisse der Klebung

IVa. Schälwiderstand bei Raumtemperatur (23°C)

Zur Prüfung der Klebstoffe wurden aus den Testmaterialien nach DIN 53 273 Prüfkörper hergestellt. Vor dem Aufbringen des Klebstoffes wurde das zu klebende Material mit Schleifpapier der Körnung 40 gründlich aufgerauht. Der Klebstoffauftrag erfolgte beidseitig zweimal, so daß auf jeder Seite ca. 50 g/m², bezogen auf den Feststoff, des Klebstoffes vorlagen. Anschließend wurden die Klebstoffschichten auf eine Temperatur von ca. 80°C erwärmt (Funck Schockaktiviergerät), dann die Klebung zusammengelegt

5

und mit 0,35 mPa gepreßt. Nach dem Kleben wurden die Prüfkörper zum einen sofort und zum anderen später nach 9-tägiger Lagerung bei 23°C geprüft. Der im Trennversuch von einem Spindelvorschub von 100 mm/min nach DIN 53 273 bei 23°C ermittelte Schälwiderstand ist in folgender Tabelle aufgeführt:

Tabelle 2

| Schälfestigkeiten an PVC mit 45 % DOP | | | |
|---|---|---|---|
| Klebstoff | Schälfestigkeit (N/mm) | | |
| | sofort | nach 1 Tag | nach 9 Tagen |
| 1 | 3,1 | 10,2* | - |
| 2 | 2,9 | 10,1* | - |
| 3 | 2,5 | 4,2 | 4,6 |
| 1 erfindungsgemäßer Klebstoff (Beispiel (II)) Verwendung des Vernetzers aus Beispiel I 1 | | | |
| 2 Verwendung von 2,4,6-Triisocyanatotoluol als Vernetzer | | | |
| 3 Verwendung von Desmodur RFE® (Hauptkomponente: Tris-(4-isocyanatophenyl)-thiophosphorsäureester als Vernetzer) | | | |
| * Materialausriß | | | |

IVb. Wärmefestigkeit

Zur Ermittlung der Wärmefestigkeit nach ASTM 816 D wurden die jeweils 9 Tage bei Raumtemperatur gelagerten Prüfkörper einem Scherversuch unterworfen. Hierbei wurde der Prüfkörper mit einer Masse von 11 kg belastet. Nach 20 minütigem Tempern bei 40°C wurde durch Erhöhung der Temperatur pro Minute um 0,25°C die Temperatur ermittelt, bei der die Klebung versagte. Die erreichten Temperaturen sind in Tabelle 3 aufgeführt.

Tabelle 3

| Erweichungstemperatur an PVC mit 30 % DOP | |
|---|---|
| Klebstoff | Erweichungstemperatur (°C) |
| 1 | 107 |
| 2 | 102 |
| 3 | 100 |

**Patentansprüche**

1. Vernetzer für Polymer-Klebstoffe mit einer Viskosität von 3 bis 4000 mPas/25°C, bestimmt mit Rotovisco RV 12, Fa. Haake, Germany, basierend auf den Umsetzungsprodukten von 2,4,6-Triisocyana-to-toluol und Polyolen, die eine OH-Zahl von 56 bis 1867 und eine mittlere Funktionalität von 1,2 bis 2,2 aufweisen und aus der Gruppe der Polyetherpolyole, Polyesterpolyole, Alkanpolyole sowie Polycarbonatpolyole gewählt werden, wobei der Restgehalt an 2,4,6-Triisocyanatotoluol im Umsetzungsprodukt kleiner als 1 Gew.-% ist.

2. Verfahren zur Herstellung eines Vsrnetzers nach Anspruch 1, dadurch gekennzeichnet, daß man 2,4,6-Triisocyanatotoluol mit Polyolen einer OH-Zahl von 56 bis 1867 und einer mittleren Funktionalität von 1,2 bis 2,2 ausgewählt aus der Gruppe der Polyetherpolyole, Polyesterpolyole, Alkanpolyole und Polycarbonatpolyole in Gegenwart von inerten, organischen Lösungsmitteln bei Temperaturen von 10 bis 100°C umsetzt, wobei einer OH-Gruppe der Polyolkomponente 2,95 bis 2,00 Isocyanatgruppen des Triisocyanatotoluols entsprechen.

3. Verwendung der Vernetzer nach Anspruch 1 zur Herstellung von Polymerklebstoffen auf der Basis von Natur- und Synthesekautschuken sowie Hydroxylgruppen aufweisen Polyurethanen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | DATABASE WPI<br>Week 8251,<br>Derwent Publications Ltd., London, GB;<br>AN 8209961J<br>& JP-A-57 182 436 (SUMITOMO CHEMICAL KK)<br>10. November 1982<br>* Zusammenfassung *<br>--- | 1 | C08G18/10<br>C08G18/80<br>C08G18/76<br>C08G18/69<br>C09J175/04<br>C09J175/14 |
| A | DE-A-31 26 842 (BASF)<br>* Ansprüche 1-5 *<br>--- | 1 | |
| A | EP-A-0 028 781 (BAYER)<br>* Anspruch 2 *<br>----- | 1 | |

RECHERCHIERTE SACHGEBIETE (Int.Cl.5)

C08G
C09J

Der vorliegende Recherchenbericht wurde für alle Patentansprüche erstellt

| Recherchenort | Abschlußdatum der Recherche | Prüfer |
|---|---|---|
| DEN HAAG | 4. Mai 1994 | Van Puymbroeck, M |